# EUROPÄISCHE PATENTSCHRIFT

(11) **EP 0 514 707 B1**
(45) Veröffentlichungstag und Bekanntmachung des Hinweises auf die Patenterteilung: **15.11.1995**
(21) Anmeldenummer: 92107610.5
(22) Anmeldetag: 06.05.1992
(51) Int. Cl.: C07F 3/02

(54) **Verfahren zur Herstellung von Dialkylmagnesiumverbindungen durch Umsetzung von Magnesiumhydrid mit einem Olefin**
Process for the preparation of dialkylmagnesium compounds by reaction of magnesium hydride with olefines
Procédé de préparation de composés de magnésium dialkyliques par réaction de magnésium hydrure avec des oléfines

(30) Priorität: 18.05.1991 DE 4116382
(43) Veröffentlichungstag der Anmeldung: 25.11.1992
(73) Patentinhaber: Th. Goldschmidt AG, 45127 Essen (DE)
(72) Erfinder: Klein, Klaus-Dieter, Dr., W-4330 Mülheim a.d. Ruhr (DE); Knott, Wilfried, Dr., W-4300 Essen 1 (DE); Koerner, Götz, Dr., W-4300 Essen 1 (DE)

(56) Entgegenhaltungen:
- EP-A- 0 014 983
- ANGEWANDTE CHEMIE Bd. 94, Nr. 3, 1982, Seiten 206 - 207; B. BOGDANOVIC ET AL: 'Dialkylmagnesium-Verbindungen aus Magnesium, Wasserstoff und 1-Alkenen'

## Beschreibung

Die Erfindung betrifft ein Verfahren zur Herstellung von Dialkylmagnesiumverbindungen durch Umsetzung von Magnesiumhydrid mit einem Olefin in Gegenwart von Halogeniden der IV. bis VIII. Nebengruppe und einem Ether als Reaktionsmedium bei einem Druck von 1 bis 300 bar und in einem Temperaturbereich von 0 bis 200°C.

Der nächstliegende Stand der Technik ist in der europäischen Patentschrift 0 014 983 beschrieben. Das europäische Patent betrifft ein Verfahren zur Herstellung von Dialkylmagnesiumverbindungen R₂Mg durch Umsetzung von Magnesiumhydrid MgH₂ oder Magnesium und Wasserstoff mit einem Olefin in Gegenwart eines Katalysators, mit dem Kennzeichen, daß man als Katalysator entweder
a) magnesiumorganische Verbindungen zusammen mit Halogeniden eines Übergangsmetalls der IV. bis VIII. Nebengruppe des periodischen Systems oder
b) Magnesiumhydrid, das aus Magnesium und Wasserstoff (1 bis 300 bar) in Gegenwart eines polycyclischen Aromaten und ggfls. noch eines tertiären Amins als Aktivatoren, bei Temperaturen von 0 bis 200°C hergestellt worden ist, zusammen mit Halogeniden der IV. bis VIII. Nebengruppe des periodischen Systems,
verwendet.

Die Umsetzung soll vorzugsweise in Gegenwart eines Lösungsmittels durchgeführt werden, wobei als Lösungsmittel Tetrahydrofuran bevorzugt ist. Die bevorzugten Reaktionsbedingungen sind Drucke von 1 bis 300 bar und Temperaturen von 0 bis 200°C.

Die Herstellung des Katalysators ist in den Beispielen des europäischen Patentes 0 014 983 näher beschrieben. Entsprechend diesen Beispielen wird zuerst Magnesiumpulver (50 mesh) in Tetrahydrofuran suspendiert. Der Suspension wird Ethylbromid und nach halbstündigem Rühren Anthracen zugegeben. Es wird nun bis zur Bildung des Magnesiumanthracens gerührt. Anschließend wird das Halogenid der IV. bis VIII. Nebengruppe des periodischen Systems zugegeben. Beispiele solcher Chloride sind CrCl₃, TiCl₄, NiCl₂, VCl₄, ZrCl₄ und HfCl₄. Nach weiterem Rühren bildet sich die gewünschte und je nach Art des Halogenids gefärbte Katalysatorlösung.

Entsprechend dem europäischen Patent 0 014 983 wird dieser Katalysatorlösung Magnesiumhydrid zugegeben. Dieser Suspension wird nun das Olefin zugeführt. Die Anlagerung des Olefins erfolgt in einem Temperaturbereich von 0 bis 200°C und einem Druck von 1 bis 300 bar.

Die vorliegende Erfindung befaßt sich mit dem Problem der Herstellung von Dialkylmagnesiumverbindungen unter Verzicht auf die Verwendung des vorstehend beschriebenen komplexen Katalysators.

Die Erfindung befaßt sich insbesondere mit dem Problem, Dialkylmagnesiumverbindungen durch Umsetzung von Magnesiumhydrid mit einem Olefin in möglichst einfacher und wirtschaftlicher Weise herzustellen. Dabei soll insbesondere auf die Verwendung polycyclischer Aromaten verzichtet werden.

Gegenstand der vorliegenden Erfindung ist ein Verfahren der eingangs beschriebenen Gattung mit dem Kennzeichen, daß man Magnesiumhydrid verwendet, welches vor und gegebenenfalls zusätzlich während der Umsetzung mit dem Olefin durch Mahlen auf eine Teilchengröße ≦ 10 µm aktiviert worden ist, und das Verfahren ohne Zusatz komplexer Katalysatoren durchführt.

Es war für den Fachmann überraschend, daß durch die Aufmahlung des Magnesiumhydrids auf eine Teilchengröße ≦ 10 µ, insbesondere ≦ 1 µ, eine derartige Aktivierung des Magnesiumhydrids erfolgt, daß die Anlagerung des Olefins in Gegenwart von Halogeniden der IV. bis VIII. Nebengruppe, jedoch ohne den Zusatz weiterer Katalysatoren, mit hohen Ausbeuten erfolgt.

Zur Durchführung des erfindungsgemäßen Verfahrens suspendiert man das Magnesiumhydrid in einem Ether, vorzugsweise Tetrahydrofuran oder Diglyme. Weitere Beispiele geeigneter Ether sind Dioxan oder Diethylether. Diese Suspension wird einer Mahlvorrichtung zugeführt. Geeignete Mahlvorrichtungen sind Schwingscheibenmühlen, Mühlen vom Typ des Attritors, Ringspaltrührwerkskugelmühlen, Wheeler-Mühlen, Jet-O-Mizer, Eagle-Mühlen und Fließbettstrahlmühlen, Perlmühlen nach Art der Dynomill bzw. Supermill, etc. Die Vermahlung wird solange durchgeführt, bis die Teilchengröße des Magnesiumhydrids ≦ 10 µ beträgt. Vorzugsweise soll die Teilchengröße in einem Bereich von etwa 0,5 bis 1 µ liegen.

Dieser Suspension werden nun die Halogenide der IV. bis VIII. Nebengruppe in üblichen Mengen zugegeben. Dabei soll der Quotient aus Magnesium und Übergangsmetallhalogenid einen Wert von 10 000 bis 1 haben. Als Übergangsmetallhalogenide können die in der europäischen Patentschrift 0 014 983 genannten Halogenide verwendet werden, wie z.B. CrCl₃, TiCl₄, NiCl₂, VCl₄, HfCl₃.

Bei der Reaktion des Magnesiumhydrids mit dem Olefin werden zuerst bevorzugt die Magnesiumhydridteilchen kleinsten Durchmessers umgesetzt. Es ist deshalb häufig von Vorteil, die Aufmahlung des Magnesiumhydrids und damit dessen Aktivierung auch während der Umsetzung mit dem Olefin fortzusetzen, um die Feinstanteile des Magnesiumhydrids kontinuierlich nachzubilden.

Als Magnesiumhydrid verwendet man vorzugsweise ein Speichermagnesiumhydrid, welches bereits eine relativ niedrige Teilchengröße aufweist und schüttfähig ist. Ein solches Speichermagnesiumhydrid kann entsprechend der DE-OS .. .. ... (Patentanmeldung P 40 27 976.6) hergestellt werden.

Als Olefin verwendet man vorzugsweise α-Olefine der allgemeinen Formel CH₂=CHR, wobei der Rest R ein Wasserstoff-, Alkyl- oder Cycloalkylrest ist. Der Rest R weist im allgemeinen 1 bis 10 Kohlenstoffatome auf.

Beispiele geeigneter Alkylreste sind Ethyl-, Propyl-, Butyl-, Pentyl-, Hexyl-, Heptyl-, Octyl-, Nonyl- oder Decyl-Reste.

Die Anlagerungsreaktion ist innerhalb eines Zeitraumes von etwa 4 bis 48 Stunden beendet.

In einer bevorzugten Ausführungsform des erfindungsgemäßen Verfahrens wird das Verfahren in Gegenwart katalytischer Mengen eines Aluminiumtrialkyls durchgeführt. Als Alkylreste kommen insbesondere solche mit 1 bis 4 Kohlenstoffatomen, vorzugsweise Ethylreste in Frage. Unter dem Begriff der katalytischen Menge sind dabei Mengen von etwa 1 bis 5 Mol-%, bezogen auf MgH₂, zu verstehen.

Durch den Zusatz dieses nichtkomplexen Katalysators wird eine Erhöhung der Ausbeute an Dialkylmagnesiumverbindung erreicht.

Das erfindungsgemäße Verfahren wird anhand der folgenden Beispiele noch näher erläutert.

### Beispiel 1

Speichermagnesiumhydrid MgH₂, das aus Magnesium und Wasserstoff hergestellt wurde und eine mittlere Partikelgröße von 0,054 mm besitzt, wird für 20 Minuten in einer Scheibenschwingmühle unter Inertgas vermahlen. 11,26 g (0,402 Mol) derartig voraktivierten Magnesiumhydrids werden in einer Laborkugelmühle vorgelegt und nacheinander mit 366 ml THF, 2,8 g (0,012 Mol) ZrCl₄ und 90,2 g (0,804 Mol) 1-Octen versetzt. Der Reaktionsansatz wird unter stetigem Mahlen 15 Stunden auf Rückflußtemperatur erhitzt. Mit einer Spritze wird eine Probe entnommen und 1 Stunde bei 4000 Upm unter Inertgas zentrifugiert. Ein aliquoter Teil des klaren Überstandes wird entnommen, hydrolysiert, dann werden der Magnesiumgehalt komplexometrisch und der Gehalt an Octan gaschromatographisch bestimmt. Ausbeute: 34 % (bez. auf eingesetztes MgH₂).

### Beispiel 2

In einer Laborkugelmühle werden 28,0 g (1,0 Mol) 94 %igen Speichermagnesiumhydrids MgH₂ mit einer mittleren Partikelgröße von 0,054 mm in 475 ml THF für 10 Stunden vermahlen. 2,33 g (0,0094 Mol) ZrCl₄ und 210,8 g (2,50 Mol) 1-Hexen werden nacheinander hinzugefügt und der Reaktionsansatz wird unter stetigem Mahlen für 24 Stunden auf Rückflußtemperatur erhitzt. Mit einer Spritze wird eine Probe entnommen und 1 Stunde bei 4000 Upm unter Inertgas zentrifugiert. Ein aliquoter Teil des klaren Überstandes wird entnommen, hydrolysiert, dann werden der Magnesiumgehalt komplexometrisch und der Gehalt an Hexan gaschromatographisch bestimmt. Ausbeute: 30 % (bez. auf eingesetztes MgH₂).

### Beispiel 3

In einem 300-ml-Laborautoklaven mit Magnetrührer werden 4,3 g (0,152 Mol) Magnesiumhydrid MgH₂ vorgelegt, das durch die Vermahlung von Speicherhydrid mit einer mittleren Partikelgröße von 0,054 mm in einer Scheibenschwingmühle für 20 Minuten unter Inertgas erhalten wird. 1,1 g (0,0047 Mol) ZrCl₄ und 158,4 g THF werden hinzugegeben, der Autoklav verschlossen und mit 30 bar Ethylen C₂H₄ beaufschlagt. Man erhitzt den Reaktionsansatz unter Rühren für 18 Stunden auf 75°C. Nach beendeter Reaktion läßt man den Autoklaven abkühlen, entspannt langsam und hebert die dunkelbraun gefärbte Reaktionslösung in ein argongefülltes Gefäß. Im Autoklav verbleibt neben nicht umgesetztem MgH₂ eine kleine Menge festen Polyethylens (5,1 g). Die komplexometrische und acidimetrische Analyse der Reaktionslösung belegen eine Ausbeute von 24 % Magnesiumdiethyl (bez. auf eingesetztes MgH₂).

### Beispiel 4

Eine Lösung von 49 g (77 ml, 0,7 Mol) 1-Penten in 250 ml absoluten Tetrahydrofurans wird unter Schutzgasbedampfung zu 13,8 g (95 %ig, 0,5 Mol) Magnesiumhydrid gegeben, dem 3,9 g (0,015 Mol) ZrCl₄ beigemischt sind und 24 Stunden unter Rückfluß gemahlen, wobei die Innentemperatur 55°C nie übersteigt.

Das eingesetzte Magnesiumhydrid wird in einer Scheibenschwingmühle vorvermahlen und sofort weiterverwendet.

Die Ausbeute an Dipentylmagnesium wird komplexometrisch bestimmt und beträgt 25 %.

### Beispiel 5

In einer Laborkugelmühle werden 5,8 g (0,2 Mol) 91 %igen Speichermagnesiumhydrids MgH₂, das entsprechend Beispiel 3 in einer Scheibenschwingmühle für 20 Minuten unter Inertgas vermahlen wurde, in 284 ml THF vorgelegt. 0,69 g (0,006 Mol) (C₂H₅)₃Al, 1,7 g (0,006 Mol) ZrCl₄ und 44,9 g (0,4 Mol) 1-Octen werden nacheinander hinzugefügt und der Reaktionsansatz wird unter stetigem Mahlen für 24 Stunden auf Rückflußtemperatur erhitzt. Mit einer Spritze wird eine Probe entnommen und 1 Stunde bei 4000 Upm unter Inertgas zentrifugiert. Ein aliquoter Teil des klaren Überstandes wird entnommen, hydrolysiert, dann werden der Magnesiumgehalt komplexometrisch und der Gehalt an Octan gaschromatographisch bestimmt. Ausbeute: 84 % (bez. auf eingesetztes MgH₂).

## Patentansprüche

1. Verfahren zur Herstellung von Dialkylmagnesiumverbindungen durch Umsetzung von Magnesiumhydrid mit einem Olefin in Gegenwart von Halogeniden der IV. bis VIII. Nebengruppe und einem Ether als Reaktionsmedium bei einem Druck von 1 bis 300 bar und in einem Temperaturbereich von 0 bis 200°C, dadurch gekennzeichnet, daß man Magnesiumhydrid verwendet, welches vor und gegebenenfalls zusätzlich während der Umsetzung mit dem Olefin durch Mahlen auf eine Teilchengröße ≦ 10 µm aktiviert worden ist, und das Verfahren ohne Zusatz komplexer Katalysatoren durchführt.

2. Verfahren nach Anspruch 1, dadurch gekennzeichnet, daß man das Verfahren in Gegenwart katalytischer Mengen eines Aluminiumtrialkyls durchführt.

3. Verfahren nach Anspruch 2, dadurch gekennzeichnet, daß man das Verfahren in Gegenwart von Aluminiumtriethyl durchführt.

## Claims

1. Process for the preparation of dialkylmagnesium compounds by reacting magnesium hydride with an olefin in the presence of halides from sub-group IV to VIII and in the presence of an ether as reaction medium at a pressure of from 1 to 300 bar and in a temperature range of from 0 to 200°C, characterized in that the magnesium hydride used has been activated prior to and optionally additionally during the reaction with the olefin by grinding to a particle size of ≦ 10 µm, and the process is carried out without addition of complex catalysts.

2. Process according to Claim 1, characterized in that the process is carried out in the presence of catalytic amounts of a trialkylaluminium compound.

3. Process according to Claim 2, characterized in that the process is carried out in the presence of triethylaluminium.

## Revendications

1. Procédé de préparation de composés de dialkylmagnésium par réaction d'hydrure de magnésium avec une oléfine, en présence d'halogénures des groupes secondaires IV à VIII et d'un éther, comme milieu de réaction, à une pression de 1 à 300 bars et à une température comprise entre 0 et 200°C, caractérisé en ce qu'on utilise de l'hydrure de magnésium qui a été activé par broyage jusqu'à l'obtention de particules d'une dimension ≦ 10 µm, avant sa mise en réaction avec l'oléfine, et, en outre, éventuellement pendant cette réaction, et en ce qu'on effectue ce procédé sans ajouter des catalyseurs complexes.

2. Procédé selon la revendication 1, caractérisé en ce qu'on le met en oeuvre en présence de quantités catalytiques de trialkylaluminium.

3. Procédé selon la revendication 2, caractérisé en ce qu'on le met en oeuvre en présence de triéthylaluminium.
